# EUROPEAN PATENT APPLICATION

(11) **EP 4 817 901 A1**
(43) Date of publication of application: **07.10.2026**
(21) Application number: 24895637.7
(22) Date of filing: 02.07.2024
(51) Int. Cl.: B60H 1/00, B60W 10/00, B60W 20/00, B66D 1/46, B66D 1/12, B66D 1/74

(54) **CONTROL METHOD FOR VEHICLE, INTEGRATED CONTROL APPARATUS, ELECTRONIC APPARATUS AND VEHICLE**

(30) Priority: 30.11.2023 CN 202311637524
(71) Applicant: BYD Company Limited, Shenzhen, Guangdong 518118 (CN)
(72) Inventor: FU, Dandi, Shenzhen, Guangdong 518118 (CN); DAI, Jun, Shenzhen, Guangdong 518118 (CN); LIANG, Jianchao, Shenzhen, Guangdong 518118 (CN); ZENG, Xiaoxuan, Shenzhen, Guangdong 518118 (CN); ZHANG, Yuming, Shenzhen, Guangdong 518118 (CN)
(74) Representative: Mathys & Squire
(86) International application number: PCT/CN2024/103076
(87) International publication number: WO 2025/112534

(57) **Abstract**

A control method for a vehicle (100), an integrated control apparatus, an electronic apparatus, and a vehicle (100) are provided. The control method for the vehicle (100) includes at least one of the following: when no operating demand is present for a winch (10) and an operating demand is present for an in-vehicle air conditioning module (12), controlling, by an integrated control apparatus, the in-vehicle air conditioning module (12) to operate; and when an operating demand is present for the winch (10), controlling, by the integrated control apparatus, the winch (10) to operate, or controlling the in-vehicle air conditioning module (12) and the winch (10) to operate.

## Description

### CROSS-REFERENCE TO RELATED APPLICATIONS

This application claims priority and benefit to Chinese Patent Application No. 2023116375247 filed with the China National Intellectual Property Administration on November 30, 2023, which is incorporated herein by reference in its entirety.

### TECHNICAL FIELD

This application relates to the field of vehicle technologies, and in particular, to a control method for a vehicle, an integrated control apparatus, an electronic apparatus, and a vehicle.

### BACKGROUND

Currently, vehicles have a winch to assist other vehicles in getting unstuck or to be pulled out by another vehicle. The winch is driven by a winch motor. In related technologies, if the winch motor is independently controlled, a control apparatus of the vehicle is increased. If the control of the winch motor is integrated into another controller, the winch motor needs to operate synchronously with the motor controlled by another controller, resulting in increased energy consumption of the vehicle.

### SUMMARY

An implementation of this application provides a control method for a vehicle, an integrated control apparatus, an electronic apparatus, and a vehicle to resolve at least one of the foregoing technical problems.

A control method for a vehicle according to an implementation of this application includes at least one of the following:
when no operating demand is present for a winch and an operating demand is present for an in-vehicle air conditioning module, controlling, by an integrated control apparatus, the in-vehicle air conditioning module to operate; and
when an operating demand is present for the winch, controlling, by the integrated control apparatus, the winch to operate, or controlling the in-vehicle air conditioning module and the winch to operate.

According to the foregoing control method for the vehicle, the integrated control apparatus may control the winch and the in-vehicle air conditioning module based on an operating demand for the winch, and may control the in-vehicle air conditioning module independently when no operating demand is present for the winch, so that no excessive energy loss is caused, and energy consumption of the vehicle is reduced.

In some implementations, the vehicle includes a first motor, the first motor being connected to the in-vehicle air conditioning module, and the control method includes:
when no operating demand is present for the winch and an operating demand is present for the in-vehicle air conditioning module, controlling, by the integrated control apparatus, the first motor to drive the in-vehicle air conditioning module to operate.

In some implementations, the vehicle includes a first motor and a switching member, the first motor being selectively connected to the winch and/or the in-vehicle air conditioning module through the switching member, and the control method includes:
when no operating demand is present for the winch and an operating demand is present for the in-vehicle air conditioning module, controlling, by the integrated control apparatus, the first motor to connect the in-vehicle air conditioning module through the switching member and drive the in-vehicle air conditioning module to operate.

In some implementations, when an operating demand is present for the winch, controlling, by the integrated control apparatus, the winch to operate, or controlling the in-vehicle air conditioning module and the winch to operate includes:
when an operating demand is present for the winch and no operating demand is present for the in-vehicle air conditioning module, controlling, by the integrated control apparatus, the winch to operate, or controlling the winch and the in-vehicle air conditioning module to operate synchronously.

In some implementations, the vehicle includes a second motor, the second motor being connected to the winch, and the control method includes:
when an operating demand is present for the winch and no operating demand is present for the in-vehicle air conditioning module, controlling, by the integrated control apparatus, the second motor to drive the winch to operate.

In some implementations, the vehicle includes a first motor and a second motor, the first motor being connected to the in-vehicle air conditioning module, and the first motor being connected to the winch through the second motor, and the control method includes:
when an operating demand is present for the winch and no operating demand is present for the in-vehicle air conditioning module, controlling, by the integrated control apparatus, the first motor to drive the second motor to actuate the winch and drive the in-vehicle air conditioning module to operate synchronously.

In some implementations, the vehicle includes a battery temperature regulation module, the second motor driving the in-vehicle air conditioning module and/or the battery temperature regulation module to operate, and the control method includes:
when an operating demand is present for the winch and no operating demand is present for the in-vehicle air conditioning module, controlling, by the integrated control apparatus, the second motor to drive the first motor to actuate the winch and drive the battery temperature regulation module to operate synchronously.

In some implementations, when an operating demand is present for the winch, controlling, by the integrated control apparatus, the winch to operate, or controlling the in-vehicle air conditioning module and the winch to operate includes:
when an operating demand is present for both the winch and the in-vehicle air conditioning module, controlling, by the integrated control apparatus, the winch and the in-vehicle air conditioning module to operate.

In some implementations, the vehicle includes a first motor and a switching member, the first motor being selectively connected to the winch and/or the in-vehicle air conditioning module through the switching member, and the control method includes:
when an operating demand is present for both the winch and the in-vehicle air conditioning module, controlling, by the integrated control apparatus, the first motor to connect the winch and the in-vehicle air conditioning module through the switching member and drive the winch and the in-vehicle air conditioning module to operate synchronously.

In some implementations, the vehicle includes a first motor and a second motor, the first motor being connected to the winch, and the second motor being connected to the in-vehicle air conditioning module, and the control method includes:
when an operating demand is present for both the winch and the in-vehicle air conditioning module, controlling, by the integrated control apparatus, the first motor to drive the winch to operate, and controlling the second motor to drive the in-vehicle air conditioning module to operate.

In some implementations, the vehicle includes a first motor and a second motor, the first motor being connected to the in-vehicle air conditioning module, and the first motor being connected to the winch through the second motor, and the control method includes:
when an operating demand is present for both the winch and the in-vehicle air conditioning module, controlling, by the integrated control apparatus, the first motor to drive the second motor to actuate the winch and drive the in-vehicle air conditioning module to operate synchronously.

In some implementations, whether an operating demand is present for the winch and/or an operating demand is present for the in-vehicle air conditioning module is determined based on a control instruction output by a terminal device or a signal output by a sensor.

In some implementations, the integrated control apparatus is configured to control a rotation speed of a motor of the in-vehicle air conditioning module and a rotation speed of a motor of the winch.

In some implementations, the integrated control apparatus is further configured to parse and transmit data.

In some implementations, the integrated control apparatus includes a microcontroller unit (MCU) or a domain controller.

An integrated control apparatus provided in an implementation of this application includes a processor and a memory, the memory stores a computer program, and when the computer program is executed by the processor, steps of the control method for the vehicle according to any one of the foregoing implementations are implemented.

An electronic apparatus provided in an implementation of this application includes the integrated control apparatus according to the foregoing implementation.

A vehicle provided in an implementation of this application includes either the integrated control apparatus according to the foregoing implementation or the electronic apparatus according to the foregoing implementation.

The foregoing integrated control apparatus and the vehicle may control the winch and the in-vehicle air conditioning module based on an operating demand for the winch, and may control the in-vehicle air conditioning module independently when no operating demand is present for the winch, so that no excessive energy loss is caused, and energy consumption of the vehicle is reduced.

Additional aspects and advantages of this application are set forth in part in the following description, and part of which becomes apparent from the following description or from the practice of this application.

### BRIEF DESCRIPTION OF DRAWINGS

The foregoing and/or additional aspects and advantages of this application become apparent and readily understandable from descriptions of implementations with reference to the following accompanying drawings.
FIG. 1 is a diagram of a module of a vehicle according to an implementation of this application;
FIG. 2 is a diagram of another module of a vehicle according to an implementation of this application; and
FIG. 3 to FIG. 5 are flowcharts of a control method for a vehicle according to an implementation of this application.

### Reference numerals:

10: winch; 12: in-vehicle air conditioning module; 14: first motor; 18: second motor; 20: battery temperature regulation module; 24: terminal device; 26: sensor; 28: switch; 30: domain controller; 32: processor; 34: memory; 36: microcontroller unit; 38: power battery.
100: vehicle.

### DESCRIPTION OF EMBODIMENTS

Embodiments of this application are described in detail below, examples of which are illustrated in accompanying drawings, where same or similar reference numerals denote the same or similar elements or elements having the same or similar functions throughout. The embodiments described with reference to the accompanying drawings below are examples and intended to explain this application, and shall not be construed as limitations on this application.

The following disclosure provides numerous different implementations or examples to implement different configurations for implementations of this application. To simplify the disclosure of the implementations of this application, components and arrangements for specific examples are described below. Certainly, the components and arrangements are merely examples, and are not intended to limit this application. Implementations of this application may repeat reference numerals and/or letters in the different examples. This repetition is for the purpose of simplicity and clarity and does not in itself dictate a relationship between the various implementations and/or arrangements discussed. Furthermore, implementations of this application provide various examples of specific processes and materials, but those of ordinary skill in the art may be aware of the application of other processes and/or the use of other materials.

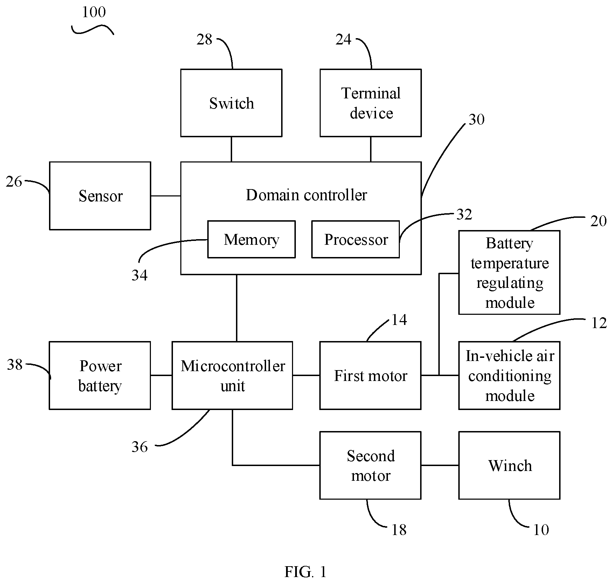

With reference to FIG. 1 to FIG. 3, an implementation of this application provides a control method for a vehicle 100, including at least one of the following.

Step S101: when no operating demand is present for a winch 10 and an operating demand is present for an in-vehicle air conditioning module 12, an integrated control apparatus controls the in-vehicle air conditioning module 12 to operate.

Step S103: when an operating demand is present for the winch 10, the integrated control apparatus controls the winch 10 to operate, or controls the in-vehicle air conditioning module 12 and the winch 10 to operate.

According to the foregoing control method for the vehicle 100, the integrated control apparatus may control the winch 10 and the in-vehicle air conditioning module 12 based on an operating demand for the winch 10, and may control the in-vehicle air conditioning module 12 independently when no operating demand is present for the winch 10, so that no excessive energy loss is caused, and energy consumption of the vehicle is reduced.

Specifically, the winch 10 may be mounted on the vehicle 100, and the winch 10 is configured to assist a host vehicle or other vehicles 100 in getting unstuck. The winch 10 generally includes a motor, an actuation mechanism, and a controller. The controller is connected to the motor, and the motor is connected to the actuation mechanism. The actuation mechanism includes a rotating shaft and a cable. One end of the cable is fixed to the rotating shaft. The controller controls the motor to drive the rotating shaft to rotate forwardly or reversely to release and retract the cable.

However, as the winch 10 is mounted on the vehicle, a controller of the winch 10 needs to be used independently to control the winch 10 to operate, which increases the number of control apparatuses on the vehicle 100 and increases the cost of the vehicle 100. If the controller of the winch 10 is integrated with another controller on the vehicle 100, the motor of the winch 10 and a motor controlled by a corresponding controller are enabled to operate synchronously. For example, the winch 10 shares a controller with a compressor controller on the vehicle, and in this case, the motor of the winch 10 or the compressor motor are required to operate or stop synchronously, but the compressor motor of the vehicle 100 has more operating conditions that require separate operation, and synchronous operation of the motor of the winch 10 and the compressor motor may cause energy loss and increase energy consumption of the vehicle.

Therefore, according to the control method for the vehicle 100 provided in this implementation of the application, operating demands for the winch 10 and the in-vehicle air conditioning module 12 can be obtained, and the winch 10 and the in-vehicle air conditioning module 12 are controlled by the integrated control apparatus. In addition, the integrated control apparatus may control the in-vehicle air conditioning module 12 to operate independently, the winch 10 can be prevented from operating simultaneously with the in-vehicle air conditioning module 12 when no operating demand is present, thereby reducing energy consumption of the vehicle.

The in-vehicle air conditioning module 12 is driven by the compressor motor of the vehicle 100, and the in-vehicle air conditioning module 12 can be driven to operate by controlling the compressor motor of the vehicle 100 to operate.

In some implementations, the foregoing control method may enable the integrated control apparatus to control the in-vehicle air conditioning module 12 to operate independently, control the winch 10 to operate independently, or control the in-vehicle air conditioning module 12 and the winch 10 to operate separately.

In some implementations, the foregoing control method may enable the integrated control apparatus to control the in-vehicle air conditioning module 12 to operate independently, or control the winch 10 and the in-vehicle air conditioning module 12 to operate synchronously.

In some implementations, the vehicle 100 includes a first motor 14, the first motor 14 is connected to the in-vehicle air conditioning module 12, and the control method includes the following.

When no operating demand is present for the winch 10 and an operating demand is present for the in-vehicle air conditioning module 12, the integrated control apparatus controls the first motor 14 to drive the in-vehicle air conditioning module 12 to operate.

In this case, the in-vehicle air conditioning module 12 can be independently controlled to operate to reduce energy loss on the vehicle.

Specifically, the in-vehicle air conditioning module 12 has a higher operating frequency than the winch 10. Therefore, the first motor 14 can be used to drive the in-vehicle air conditioning module 12 to operate. At this time, the first motor 14 may be the compressor motor. When the operating demand for the in-vehicle air conditioning module 12 is obtained, the first motor 14 is controlled to operate to drive the in-vehicle air conditioning module 12 to operate.

In some implementations, the vehicle 100 includes a first motor 14 and a switching member, the first motor 14 is selectively connected to the winch 10 and/or the in-vehicle air conditioning module 12 through the switching member, and the control method includes the following.

When no operating demand is present for the winch 10 and an operating demand is present for the in-vehicle air conditioning module 12, the integrated control apparatus controls the first motor 14 to connect the in-vehicle air conditioning module 12 through the switching member and drive the in-vehicle air conditioning module 12 to operate.

In this case, the first motor 14 can be selectively connected to the winch 10 and the in-vehicle air conditioning module 12 through the switching member, so that the winch 10 and the in-vehicle air conditioning module 12 can be controlled synchronously or separately by the first motor 14 to operate based on the operating demands for the winch 10 and the in-vehicle air conditioning module 12.

Specifically, the switching member is configured to connect an output shaft of the motor to either the winch 10 or the compressor, so that a rotation shaft of the winch 10 or a compressor can operate to drive the in-vehicle air conditioning module 12 to operate. The switching member includes a clutch or an automotive transmission.

For example, the first motor 14 is selectively connected to the winch 10 and the in-vehicle air conditioning module 12 through the clutch, and when the clutch is in a first position, an output shaft of the first motor 14 is connected to the in-vehicle air conditioning module 12, so that the first motor 14 can drive the in-vehicle air conditioning module 12 to operate. When the clutch is in a second position, the output shaft of the first motor 14 and the rotation shaft of the winch 10 are connected, so that the first motor 14 drives the rotation shaft of the winch 10 to rotate to release or retract the cable. Alternatively, when the clutch is in a third position, the output shaft of the first motor 14, the rotation shaft of the winch 10, and the in-vehicle air conditioning module 12 may be connected at the same time, so that the first motor 14 drives the winch 10 and the in-vehicle air conditioning module 12 to operate simultaneously.

When no operating demand is present for the winch 10 and an operating demand is present for the in-vehicle air conditioning module 12, the integrated control apparatus controls the switching member to connect the first motor 14 and the compressor, and the compressor operates to drive the in-vehicle air conditioning module 12 to operate.

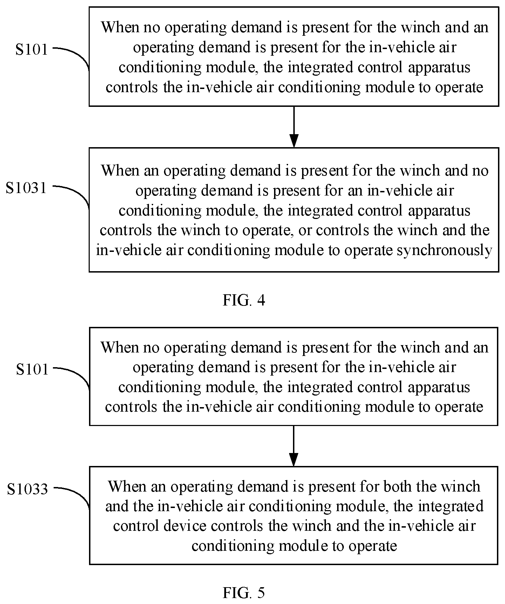

With reference to FIG. 4, in some implementations, step S103 includes the following.

Step S1031: when an operating demand is present for the winch 10 and no operating demand is present for the in-vehicle air conditioning module 12, the integrated control apparatus controls the winch 10 to operate, or controls the winch 10 and the in-vehicle air conditioning module 12 to operate synchronously.

In this case, when the controller of the winch 10 is integrated with a controller of an on-board compressor, the integrated control apparatus may control the winch 10 to operate independently or control the winch 10 and the in-vehicle air conditioning module 12 to operate synchronously.

Specifically, in the control of the winch 10 and the in-vehicle air conditioning module 12, one motor may be provided, and the output shaft of the motor may be selectively connected to the winch 10 or the in-vehicle air conditioning module 12, or simultaneously connected to the winch 10 and the air conditioning module by disposing a switching member, enabling simultaneous operation of the winch 10 and the in-vehicle air conditioning module 12. In this case, the setting of the motor on the vehicle 100 can be reduced, thereby saving a mounting space of the winch 10. Alternatively, two motors may be provided, where a first motor 14 drives the in-vehicle air conditioning module 12 to operate, and a second motor 18 drives the winch 10 to operate. In this case, rotation speeds and rotation directions of the first motor 14 and the second motor 18 can be controlled separately, so that the in-vehicle air conditioning module 12 and the winch 10 can be controlled separately, with better control effect.

The first motor 14 and the second motor 18 include, but are not limited to, a high-voltage synchronous motor, a high-voltage asynchronous motor, a high-voltage asynchronous wound motor, or the like. Optionally, when the first motor 14 and the second motor 18 need to operate synchronously, the first motor 14 and the second motor 18 may be motors of the same type and the same model to improve reliability of the motor.

In some implementations, the vehicle 100 includes a second motor 18, the second motor 18 is connected to the winch 10, and the control method includes the following.

When an operating demand is present for the winch 10 and no operating demand is present for the in-vehicle air conditioning module 12, the integrated control apparatus controls the second motor 18 to drive the winch 10 to operate.

In this case, the second motor 18 independently drives the winch 10 to operate, thereby implementing independent control on the winch 10.

Specifically, the vehicle includes a first motor 14 and a second motor 18. The first motor 14 drives the in-vehicle air conditioning module 12 to operate, and the second motor 18 drives the winch 10 to operate, so that the winch 10 and the in-vehicle air conditioning module 12 can operate separately or simultaneously, and the winch 10 and the in-vehicle air conditioning module 12 do not affect each other.

In some implementations, the vehicle 100 includes a first motor 14 and a second motor 18, the first motor 14 is connected to the in-vehicle air conditioning module 12, the first motor 14 is connected to the winch 10 through the second motor 18, and the control method includes the following.

When an operating demand is present for the winch 10 and no operating demand is present for the in-vehicle air conditioning module 12, the integrated control apparatus controls the first motor 14 to drive the second motor 18 to actuate the winch 10 and drive the in-vehicle air conditioning module 12 to operate synchronously.

In this case, the first motor 14 drives the second motor 18 to make the winch 10 and the in-vehicle air conditioning module 12 operate synchronously, which helps reduce control apparatus on the vehicle and saves costs.

Specifically, the first motor 14 and the second motor 18 are connected through a transmission shaft, the first motor 14 may operate independently, or the first motor 14 is connected to the second motor 18 through the transmission shaft, so that the first motor 14 can drive the second motor 18 to rotate synchronously. Therefore, the first motor 14 can drive the in-vehicle air conditioning module 12, and simultaneously actuates the second motor 18 to drive the winch 10 to operate. Therefore, one integrated control apparatus is configured to control the first motor 14 to operate independently, or the first motor 14 and the second motor 18 to operate synchronously. This helps reduce the number of control apparatus on the vehicle and saves costs.

In some implementations, the vehicle 100 includes a battery temperature regulation module 20, the second motor 18 drives the in-vehicle air conditioning module 12 and/or the battery temperature regulation module 20 to operate, and the control method includes the following.

When an operating demand is present for the winch 10 and no operating demand is present for the in-vehicle air conditioning module 12, the integrated control apparatus controls the second motor 18 to drive the first motor 14 to actuate the winch 10 and drive the battery temperature regulation module 20 to operate synchronously.

In this case, when no operating demand is present for the in-vehicle air conditioning module 12, the compressor may actuate the battery temperature regulation module 20 to operate.

Specifically, the first motor 14 and the second motor 18 are connected through a transmission shaft, and the first motor 14 drives the second motor 18 to operate through the transmission shaft. Therefore, when the second motor 18 needs to operate, the first motor 14 is required to be started to operate to drive the second motor 18. As the first motor 14 is configured to drive the compressor to operate, the compressor needs to be in an operating state when the second motor 18 drives the winch 10 to operate. On the vehicle 100 having a power battery 38, the operation of the compressor may enable the in-vehicle air conditioning module 12 to operate to regulate a temperature of a passenger compartment within the vehicle 100, and enable the battery temperature regulation module 20 to operate to regulate a temperature of a power motor of the vehicle 100. In this case, if an operating demand is present for the winch 10, it is necessary to control the first motor 14 and the second motor 18 to operate synchronously, while no operating demand is present for the in-vehicle air conditioning module 12, an in-vehicle air conditioner is in an off state. If the in-vehicle air conditioning module 12 is suddenly activated, it is inconsistent with user settings and may adversely affect user experience. If the first motor 14 rotates but the in-vehicle air conditioning module 12 is in a non-operating state, the compressor may enter an overload protection state, which may damage the first motor 14. Therefore, the first motor 14 can be rotated to drive the battery temperature regulation module 20 to operate to regulate the temperature of the power battery 38 of the vehicle 100. In this case, an original state of the in-vehicle air conditioning module 12 can be maintained, making a temperature regulation cycle smooth; and overload protection of the compressor is prevented, and damage to the compressor is avoided.

In some implementations, the vehicle 100 includes a first motor 14 and a switching member, the first motor 14 is selectively connected to the winch 10 and/or the in-vehicle air conditioning module 12 through the switching member, and the control method includes the following.

When an operating demand is present for the winch 10 and no operating demand is present for the in-vehicle air conditioning module 12, the integrated control apparatus controls the first motor 14 to connect the winch 10 through the switching member and drive the winch 10 to operate.

In this case, the integrated control apparatus controls the switching member to connect the winch 10 or the in-vehicle air conditioning module 12 depending on whether an operating demand is present for the winch 10 and the in-vehicle air conditioning module 12.

Specifically, the vehicle 100 includes a first motor 14 and a switching member, and the switching member is configured to selectively connect the first motor 14 to the winch 10 or the in-vehicle air conditioning module 12 based on demands for the winch 10 and the in-vehicle air conditioning module 12. When an operating demand is present for the winch 10 and no operating demand is present for the in-vehicle air conditioning module 12, the switching member is controlled to connect the first motor 14 and the winch 10, and the first motor 14 is controlled to drive the winch 10 to operate, thereby implementing independent control of the winch 10.

With reference to FIG. 5, in some implementations, step S103 includes the following.

Step S1033: when an operating demand is present for both the winch 10 and the in-vehicle air conditioning module 12, the integrated control apparatus controls the winch 10 and the in-vehicle air conditioning module 12 to operate.

In this way, based on the operating demands for the winch 10 and the in-vehicle air conditioning module 12, the winch 10 and the in-vehicle air conditioning module 12 may be separately driven to operate in different control modes, or the winch 10 and the in-vehicle air conditioning module 12 may be controlled to operate synchronously.

Specifically, when an operating demand is present for both the winch 10 and the in-vehicle air conditioning module 12, the winch 10 and the in-vehicle air conditioning module 12 are controlled to operate. It may be that the first motor 14 drives the in-vehicle air conditioning module 12, and the second motor 18 drives the winch 10, so that the first motor 14 and the second motor 18 may be separately controlled to operate, and the first motor 14 and the second motor 18 may be different in both rotation speed and rotation direction. Alternatively, the first motor 14 simultaneously drives the winch 10 and the in-vehicle air conditioning module 12 to operate through the first motor 14 and the switching member. Alternatively, the first motor 14 and the second motor 18 may be connected through a transmission shaft, so that the first motor 14 drives the second motor 18 to rotate synchronously, the first motor 14 drives the in-vehicle air conditioning module 12 to operate, and simultaneously actuates the second motor 18 to drive the winch 10 to operate.

In some implementations, the vehicle 100 includes a first motor 14 and a switching member, the first motor 14 is connected to the winch 10 and/or the in-vehicle air conditioning module 12 through the switching member, and the control method includes the following.

When an operating demand is present for both the winch 10 and the in-vehicle air conditioning module 12, the integrated control apparatus controls the first motor 14 to connect the winch 10 and the in-vehicle air conditioning module 12 through the switching member and drives the winch 10 and the in-vehicle air conditioning module 12 to operate synchronously.

In this case, synchronous control of the winch 10 and the in-vehicle air conditioning module 12 can be implemented through the first motor 14 and the switching member.

Specifically, when an operating demand is present for both the winch 10 and the in-vehicle air conditioning module 12, the integrated control apparatus may control the switching member to simultaneously connect the winch 10 and the in-vehicle air conditioning module 12, so that the winch 10 and the in-vehicle air conditioning module 12 can operate simultaneously. Synchronous control of the winch 10 and the in-vehicle air conditioning module 12 can be implemented through the first motor 14 and the switching member.

In some implementations, the vehicle 100 includes a first motor 14 and a second motor 18, the first motor 14 is connected to the winch 10, the second motor 18 is connected to the in-vehicle air conditioning module 12, and the control method includes the following.

When an operating demand is present for both the winch 10 and the in-vehicle air conditioning module 12, the integrated control apparatus controls the first motor 14 to drive the winch 10 to operate, and controls the second motor 18 to drive the in-vehicle air conditioning module 12 to operate.

In this case, the integrated control apparatus may control rotation speeds and rotation directions of the first motor 14 and the second motor 18 separately, thereby controlling the in-vehicle air conditioning module 12 and the winch 10 to operate separately.

Specifically, the first motor 14 drives the in-vehicle air conditioning module 12, and the second motor 18 drives the winch 10, so that the first motor 14 and the second motor 18 may be separately controlled to operate, and the first motor 14 and the second motor 18 may be different in the rotation speed and rotation direction.

In some implementations, the vehicle 100 includes a first motor 14 and a second motor 18, the first motor 14 is connected to the in-vehicle air conditioning module 12, the first motor 14 is connected to the winch 10 through the second motor 18, and the control method includes the following.

When an operating demand is present for both the winch 10 and the in-vehicle air conditioning module 12, the integrated control apparatus controls the first motor 14 to drive the second motor 18 to actuate the winch 10 and drive the in-vehicle air conditioning module 12 to operate synchronously.

In this case, the integrated control apparatus may control the first motor 14 and the second motor 18 to rotate synchronously, thereby implementing synchronous control of the winch 10 and the in-vehicle air conditioning module 12.

Specifically, the first motor 14 and the second motor 18 are connected through a transmission shaft, so that the first motor 14 drives the second motor 18 to rotate synchronously, the first motor 14 drives the in-vehicle air conditioning module 12 to operate, and simultaneously actuates the second motor 18 to drive the winch 10 to operate.

In some implementations, whether an operating demand is present for the winch 10 and/or an operating demand is present for the in-vehicle air conditioning module 12 is determined based on a control instruction output by a terminal device 24 or a signal output by a sensor 26.

In this case, a switch 28 of each of the winch 10 and the in-vehicle air conditioning module 12 may be controlled by the terminal device 24, or an operating demand for the winch 10 or the in-vehicle air conditioning module 12 may be determined by a signal output by the sensor 26.

Specifically, the terminal device 24 includes, but is not limited to, a vehicle key, a tablet computer, a smart phone, a wearable smart device, and the like. The user may generate an operating demand for the winch 10 or the in-vehicle air conditioning module 12 by the terminal device 24. The integrated control apparatus is in communication connection with the terminal device 24, an operating demand is sent to the integrated control apparatus by the terminal device 24, and the integrated control apparatus controls, based on different operating demands, the winch 10 to operate, the in-vehicle air conditioning module 12 to operate, or both the winch 10 and an in-vehicle air conditioner to start operating.

Alternatively, the sensor 26 may include a temperature sensor, a slope sensor, a pressure sensor, a sunlight irradiation sensor, and the like. The sensors may be independent modules, may be integrated into one module, or may be modules integrated into a product. The sensors are connected to the integrated control apparatus by a low-voltage harness.

In an example, the operating demand for the in-vehicle air conditioning module may be generated based on information collected by the sensor 26. For example, a maximum temperature and a minimum temperature in the passenger compartment of the vehicle 100 may be preset, and an operating demand for the in-vehicle air conditioning module 12 is generated when an in-vehicle temperature is higher than the preset maximum temperature or lower than the minimum temperature. Optionally, the operating demands for the winch 10 or the in-vehicle air conditioning module 12 may be generated by a voice instruction. The integrated control apparatus is connected to a voice component on the vehicle 100, and the voice component may collect a voice instruction from a user, so that the integrated control apparatus may accept the operating demand for the winch 10 or the in-vehicle air conditioning module 12 based on the voice instruction from the user.

In some implementations, the integrated control apparatus is configured to control a rotation speed of a motor of the in-vehicle air conditioning module 12 and a rotation speed of a motor of the winch 10.

In this case, the integrated control apparatus may control on/off and an operation state of the winch 10 and the in-vehicle air conditioning module 12.

Specifically, the first motor 14 drives the in-vehicle air conditioning module 12, and the second motor 18 drives the winch 10. In this way, the integrated control apparatus may control the rotation speed of the first motor 14 and the rotation speed of the second motor 18, respectively, thereby driving the in-vehicle air conditioning module 12 and the winch 10 to operate separately.

Further, the integrated control apparatus may further control the rotation directions of the first motor 14 and the second motor 18, thereby controlling release and retraction of a cable of the winch 10.

Alternatively, the first motor 14 drives the in-vehicle air conditioning module 12 and the winch 10 separately or synchronously. In this way, the integrated control apparatus may control the in-vehicle air conditioning module 12 and the winch 10 to operate separately or synchronously by controlling the rotation speed of the first motor 14.

Alternatively, the first motor 14 is connected to the second motor 18 through the transmission shaft. In this way, the integrated control apparatus may control the first motor 14 and the second motor 18 to rotate at the same rotation speed by controlling the rotation speed of the first motor 14, thereby controlling the in-vehicle air conditioning module 12 to operate independently, or controlling the in-vehicle air conditioning module 12 and the winch 10 to operate synchronously.

In some implementations, the integrated control apparatus is further configured to parse and transmit data.

In this way, the integrated control apparatus may receive and parse the operating demand for the winch 10 or the in-vehicle air conditioning module 12, and receive or send a control instruction.

Specifically, the integrated control apparatus has functions of bus data parsing, calculation, and driving. The integrated control apparatus may obtain, based on the control instruction output by the terminal device, the operating demand for the winch 10 or the in-vehicle air conditioning module 12 by means of parsing. When it is determined that an operating demand is present for the winch 10 or the in-vehicle air conditioning module 12, the control instruction is sent to the motor or the controller to control operation of a corresponding motor.

In some implementations, the integrated control apparatus includes a microcontroller unit 36 (MCU) or a domain controller 30.

Specifically, the integrated control apparatus may be a domain controller 30 on the vehicle 100. The domain controller 30 divides the vehicle into multiple domains, such as a powertrain, an intelligent cockpit, and autonomous driving, based on functions of an electronic component of the vehicle, and controls each domain in a relatively centralized way by using a multi-core CPU (central processing unit) / GPU (graphic processing unit) chip with stronger processing capability, with the advantages of modularization, compatibility, high integration, and excellent performance.

The integrated control apparatus may also be the microcontroller unit 36, the microcontroller unit 36 includes a second processor and a second memory, the second memory stores a computer program, and when the computer program is executed by the second processor, steps of the control method for a vehicle 100 according to any one of the foregoing implementations are implemented.

The microcontroller unit 36 is configured to receive an instruction from the domain controller 30 and control the first motor 14 and the second motor 18.

An integrated control apparatus provided in an implementation of this application includes a processor 32 and a memory 34. The memory 34 stores a computer program, and when the computer program is executed by the processor 32, steps of the control method for the vehicle 100 according to any one of the foregoing implementations are implemented.

Specifically, the integrated controller includes a microcontroller unit 36 (MCU) or a domain controller 30.

In an example, the integrated control apparatus is the domain controller 30, and the user performs an operation on the terminal device 24. For example, the user presses a soft button for cable retraction function of the winch 10 on the terminal device 24 (this operation may be long press or short press), and in addition, the user turns on an air conditioner switch 28 on the vehicle and sets an air outlet temperature of the air conditioner to 26°C. During a valid period of the button, the terminal device 24 issues an output instruction through a specific data communication protocol, where the output instruction is received by the domain controller 30.

The domain controller 30 determines, based on output information of the terminal device 24, operating demands of a user for the winch 10 and the in-vehicle air conditioning module 12 at this time, and controls the first motor 14 and the second motor 18. For example, the sensor 26 includes a temperature sensor 26 and a slope sensor 26. The temperature sensor 26 collects that a current temperature outside the vehicle is 30°C, a temperature inside the vehicle is 28°C, and the slope sensor 26 collects that a slope of a current position at which the vehicle 100 is located is 30°. The domain controller 30, based on output information of the sensor 26 and an output instruction (turning on an air conditioner switch 28 on the vehicle, setting a target air outlet temperature of the air conditioner to 26°C, and a cable retraction control instruction) of the terminal device 24, calculates a rotation speed (for example, 3000 r/min) of a compressor motor (first motor 14) required to make an air outlet temperature of the air conditioner reach the target air outlet temperature, as well as a rotation speed ( for example, 2000 r/min) of a second motor 18 required to pull the vehicle 100 at a constant speed when the vehicle 100 is at a current slope (30°), generates a first control instruction (a target rotation speed of the compressor motor is 2000 r/min) and a second control instruction (a target rotation speed of a second motor 18 is 3000 r/min), and controls the first motor 14 and the second motor 18 to be in operation at the target rotation speed based on the first control instruction.

Optionally, the operating demands for the winch 10 and the in-vehicle air conditioning module 12 may be generated by the switch 28 on the vehicle 100. The switch 28 may include a physical switch 28 or a virtual switch 28. The virtual switch 28 may include a virtual switch 28 displayed on a display component of the vehicle 100, and the user may operate (a long press, a short press, or the like) the virtual switch 28 through the display component of the vehicle 100 to generate an operating demand.

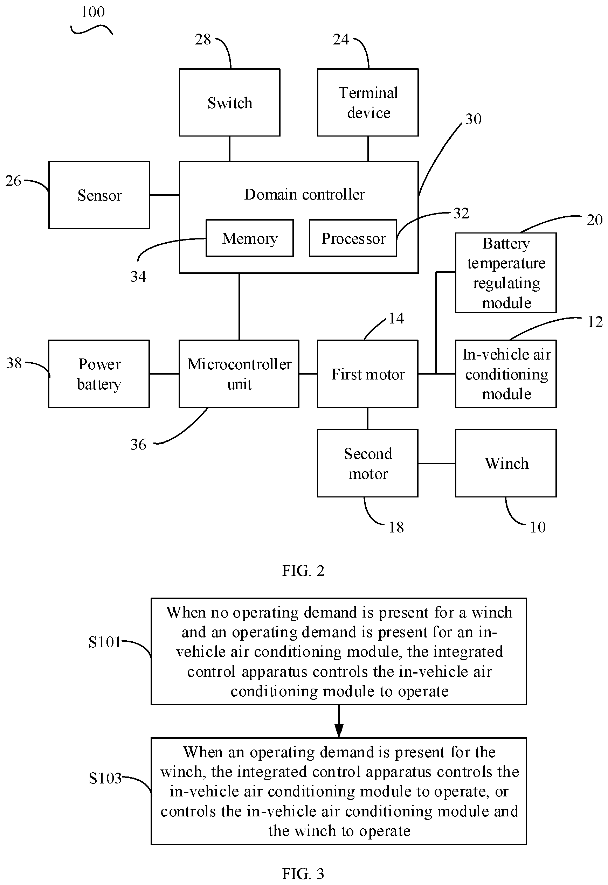

As shown in FIG. 1 and FIG. 2, in some implementations, the vehicle 100 further includes a microcontroller unit 36. The microcontroller unit 36 is configured to receive a control instruction from the domain controller 30 and control the first motor 14 and the second motor 18 based on the control instruction.

A communication mode between the domain controller 30 and the terminal device 24, between the domain controller 30 and the sensor 26, and between the domain controller 30 and the microcontroller unit 36 include, but is not limited to, data communication protocols such as a CAN (controller area network), a CANFD (CAN flexible data-rate), a LIN (local interconnect network), and Ethernet.

In some implementations, the microcontroller unit 36 microcontroller unit 36 microcontroller unit 36 domain controller 30

The following functions may be implemented by using the foregoing control method.

S01: a user performs an operation on a terminal device 24 or operates a switch 28. As an example, the user presses a soft button for cable release function of a winch 10 on the terminal device 24 (this operation may be long press or short press). During a valid period of the button, the terminal device 24 sends a cable release demand signal via a specific data communication protocol (for example: CAN bus), and the cable release demand signal is received by the domain controller 30.

S02: after receiving an operating demand, the domain controller 30 determines whether the demand is related to activation of the winch 10; if demand is related to activation of the winch 10, the process proceeds to S03; otherwise, the process proceeds to S09. As an example, at this time, after receiving the demand signal, a domain controller 30 parses and determines that the demand is a cable release function activation demand for the winch 10, and the process proceeds to step S03.

S03: the domain controller 30 parses and records the operating demand from the terminal device or a physical switch, and converts the demand of the user for the winch 10 into a demand for a rotation speed of the winch 10. As an example, at this time, the domain controller 30 performs comprehensive calculation in combination with currently collected values of sensors 26, and finally determines that the demand is: a motor of the winch 10 operates at 2000 r/min.

S04: the domain controller 30 determines that: in this case, whether a cooling or heating demand is present for a passenger compartment, if the cooling or heating demand is present for the passenger compartment, the process proceeds to S11; otherwise, the process proceeds to S05. As an example, at this time, if the domain controller 30 does not receive an operating demand for an in-vehicle air conditioning module 12, it is determined that: if no cooling or heating demand is present, the process proceeds to step S05.

S05: the domain controller 30 determines that: at this time, if a cooling or heating demand is present for a power battery 38, the process proceeds to S11; otherwise, the process proceeds to S06. As an example, at this time, if the domain controller 30 does not receive an operating demand for the power battery 38, it is determined that: if no cooling or heating demand is present, the process proceeds to step S06.

S06: the domain controller 30 controls relevant components to turn on a battery temperature regulation module 20 when the in-vehicle air conditioning module 12 remains off. As an example, at this time, the domain controller 30 maintains the in-vehicle air conditioning module 12 in an off state, controls states of valves in the battery temperature regulation module 20, and activates battery temperature regulation, so that an operation cycle of the compressor is smooth, and overload protection of the compressor is prevented.

S07: the domain controller 30 transmits a rotation speed demand signal for the compressor and winch 10 to the microcontroller unit 36 via the bus. As an example, the domain controller 30 sends a rotation speed demand signal of 2000 r/min for the compressor and the winch 10 through a specific data communication protocol (such as: a CAN bus), and the rotation speed demand signal is received by the microcontroller unit 36.

S08: the microcontroller unit 36 controls transmission shafts in a first motor 14 and a second motor 18 to be connected as required while controlling the first motor 14 and the second motor 18 to operate at the same rotation speed. As an example, after receiving the rotation speed demand, the microcontroller unit 36 controls the transmission shafts in the first motor 14 and the second motor 18 to a connected state, and controls the rotation speeds of both the first motor 14 and the second motor 18 to 2000 r/min.

S09: the domain controller 30 transmits a demand signal for disconnecting the transmission of the winch 10 to the microcontroller unit 36 via the bus. As an example, if an operating demand for the winch 10 is not received at this time, the domain controller 30 sends a signal to deactivate the winch 10 via a particular data communication protocol (for example, CAN bus), and the signal is received by the microcontroller unit 36.

S10: the microcontroller unit 36 controls the transmission shafts in the first motor 14 and the second motor 18 to be disconnected. As an example, after receiving a signal to deactivate the winch 10, the microcontroller unit 36 controls the transmission shafts in the first motor 14 and the second motor 18 to be disconnected.

S11: the domain controller 30 maintains control states of relevant components of the in-vehicle air conditioning module 12 and the battery temperature regulation module 20. As an example, if a cooling or heating demand is present for the power battery 38 at this time, the control states of the in-vehicle air conditioning module 12 and the battery temperature regulation module 20 remain unchanged.

An electronic apparatus provided in an implementation of this application includes the integrated control apparatus according to the foregoing implementation.

Specifically, the electronic apparatus includes, but is not limited to, an apparatus, such as an onboard terminal, an onboard central control display, a smart phone, a tablet computer, an electronic speaker, or a wearable electronic device, installed on a vehicle 100.

In an implementation, the electronic apparatus is mounted on the vehicle 100. For example, the electronic apparatus includes, but is not limited to, an apparatus such as an onboard terminal and an onboard central control display mounted on the vehicle 100. The electronic apparatus is connected to a controller in each region of the vehicle 100 via a CAN bus, a LIN (local interconnect network) bus, or the like, thereby controlling the vehicle 100.

In an implementation, the electronic apparatus is in communication connection with the vehicle 100. For example, the electronic apparatus includes, but is not limited to, an apparatus such as a smart phone, a tablet computer, an electronic speaker, or a wearable electronic device. The electronic apparatus may communicate with the vehicle 100 by means of Bluetooth, a wireless network, or the like, thereby controlling the vehicle 100.

A vehicle 100 of an implementation of this application includes either the integrated control apparatus or electronic apparatus according to the foregoing implementation.

The foregoing integrated control apparatus and the vehicle 100 may control the winch 10 and the in-vehicle air conditioning module 12 based on an operating demand for the winch 10, and may control the in-vehicle air conditioning module 12 independently when no operating demand is present for the winch 10, so that no excessive energy loss is caused, and energy consumption of the vehicle is reduced.

As shown in FIG. 1 and FIG. 2, specifically, the vehicle 100 further includes a power battery 38, and the power battery 38 may supply electric power required for operation of the first motor 14 and the second motor 18. In this case, the first motor 14 and the second motor 18 may use an output voltage of the power battery 38 to drive the winch 10 and the in-vehicle air conditioning module 12 to operate, and there is no need to configure an additional power supply for the first motor 14 and the second motor 18, so that a mounting space and manufacturing costs can be saved. The power battery 38 may be in the form of a battery pack, or other forms of power battery 38.

It may be understood that the power battery 38 may supply electric power required for operation of the first motor 14 and the second motor 18, so that an operating voltage of each of the first motor 14 and the second motor 18 may be 250 V, 270 V, 300 V, 330 V, 360 V, 400 V, 450 V, 500 V, 550 V, 600 V, or other voltages not less than 250 V. Upper limits of the operating voltage of the first motor 14 and the second motor 18 may be set according to an actual situation, which is not specifically limited herein.

Specifically, the vehicle 100 includes, but is not limited to, a pure electric vehicle, a hybrid vehicle, an extended-range electric vehicle, a fuel vehicle, a hydrogen-powered vehicle, and the like.

It will be noted that the foregoing explanations and descriptions of the implementations and beneficial effects of the control method for the vehicle 100 are also applicable to the integrated control apparatus, the electronic apparatus, and the vehicle 100 in the implementations of this application. To avoid redundancy, details are not described herein.

In the descriptions of this specification, descriptions referring to the terms "one implementation", "some implementations", "example implementations", "examples", "specific example" or "some examples" mean that specific features, structures, materials, or characteristics described with reference to this implementation or example are included in at least one implementation or example of this application. In this specification, the illustrative expression of the foregoing terms does not necessarily refer to the same implementation or example. Moreover, the specific features, structures, materials, or characteristics described may be combined in any one or more implementations or examples in a suitable manner.

Although implementations of this application have been shown and described, those of ordinary skill in the art will understand that many changes, modifications, substitutions, and variations can be made to these implementations without departing from the principles and purposes of this application, and the scope of this application is defined by the claims and their equivalents.

## Claims

1. A control method for a vehicle, comprising at least one of the following steps:
when no operating demand is present for a winch and an operating demand is present for an in-vehicle air conditioning module, controlling, by an integrated control apparatus, the in-vehicle air conditioning module to operate; and
when an operating demand is present for the winch, controlling, by the integrated control apparatus, the winch to operate, or controlling the in-vehicle air conditioning module and the winch to operate.

2. The control method according to claim 1, wherein the vehicle comprises a first motor, the first motor is connected to the in-vehicle air conditioning module, and the control method comprises:
when no operating demand is present for the winch and an operating demand is present for the in-vehicle air conditioning module, controlling, by the integrated control apparatus, the first motor to drive the in-vehicle air conditioning module to operate.

3. The control method according to claim 1, wherein the vehicle comprises a first motor and a switching member, the first motor is selectively connected to the winch and/or the in-vehicle air conditioning module through the switching member, and the control method comprises:
when no operating demand is present for the winch and an operating demand is present for the in-vehicle air conditioning module, controlling, by the integrated control apparatus, the first motor to connect the in-vehicle air conditioning module through the switching member and drive the in-vehicle air conditioning module to operate.

4. The control method according to claim 1, wherein when an operating demand is present for the winch, controlling, by the integrated control apparatus, the winch to operate, or controlling the in-vehicle air conditioning module and the winch to operate comprises:
when an operating demand is present for the winch and no operating demand is present for the in-vehicle air conditioning module, controlling, by the integrated control apparatus, the winch to operate, or controlling the winch and the in-vehicle air conditioning module to operate synchronously.

5. The control method according to claim 4, wherein the vehicle comprises a second motor, the second motor is connected to the winch, and the control method comprises:
when an operating demand is present for the winch and no operating demand is present for the in-vehicle air conditioning module, controlling, by the integrated control apparatus, the second motor to drive the winch to operate.

6. The control method according to claim 4, wherein the vehicle comprises a first motor and a second motor, the first motor is connected to the in-vehicle air conditioning module, the first motor is connected to the winch through the second motor, and the control method comprises:
when an operating demand is present for the winch and no operating demand is present for the in-vehicle air conditioning module, controlling, by the integrated control apparatus, the first motor to drive the second motor to actuate the winch and drive the in-vehicle air conditioning module to operate synchronously.

7. The control method according to claim 6, wherein the vehicle comprises a battery temperature regulation module, the second motor drives the in-vehicle air conditioning module and/or the battery temperature regulation module to operate, and the control method comprises:
when an operating demand is present for the winch and no operating demand is present for the in-vehicle air conditioning module, controlling, by the integrated control apparatus, the second motor to drive the first motor to actuate the winch and drive the battery temperature regulation module to operate synchronously.

8. The control method according to claim 1, wherein when an operating demand is present for the winch, controlling, by the integrated control apparatus, the winch to operate, or controlling the in-vehicle air conditioning module and the winch to operate comprises:
when an operating demand is present for both the winch and the in-vehicle air conditioning module, controlling, by the integrated control apparatus, the winch and the in-vehicle air conditioning module to operate.

9. The control method according to claim 8, wherein the vehicle comprises a first motor and a switching member, the first motor is selectively connected to the winch and/or the in-vehicle air conditioning module through the switching member, and the control method comprises:
when an operating demand is present for both the winch and the in-vehicle air conditioning module, controlling, by the integrated control apparatus, the first motor to connect the winch and the in-vehicle air conditioning module through the switching member and drive the winch and the in-vehicle air conditioning module to operate synchronously.

10. The control method according to claim 8, wherein the vehicle comprises a first motor and a second motor, the first motor is connected to the winch, the second motor is connected to the in-vehicle air conditioning module, and the control method comprises:
when an operating demand is present for both the winch and the in-vehicle air conditioning module, controlling, by the integrated control apparatus, the first motor to drive the winch to operate, and controlling the second motor to drive the in-vehicle air conditioning module to operate.

11. The control method according to claim 8, wherein the vehicle comprises a first motor and a second motor, the first motor is connected to the in-vehicle air conditioning module, the first motor is connected to the winch through the second motor, and the control method comprises:
when an operating demand is present for both the winch and the in-vehicle air conditioning module, controlling, by the integrated control apparatus, the first motor to drive the second motor to actuate the winch and drive the in-vehicle air conditioning module to operate synchronously.

12. The control method according to any one of claims 1 to 11, wherein whether an operating demand is present for the winch and/or an operating demand is present for the in-vehicle air conditioning module is determined based on a control instruction output by a terminal device or a signal output by a sensor.

13. The control method according to any one of claims 2 to 12, wherein the integrated control apparatus is configured to control a rotation speed of a motor of the in-vehicle air conditioning module and a rotation speed of a motor of the winch.

14. The control method according to claim 13, wherein the integrated control apparatus is further configured to parse and transmit data.

15. The control method according to any one of claims 1 to 14, wherein the integrated control apparatus comprises a microcontroller unit (MCU) or a domain controller.

16. An integrated control apparatus, comprising:
a processor; and
a memory, wherein the memory stores a computer program, and when the computer program is executed by the processor, steps of the control method for a vehicle according to any one of claims 1 to 15 are implemented.

17. An electronic apparatus, comprising the integrated control apparatus according to claim 16.

18. A vehicle, comprising either the integrated control apparatus according to claim 16 or the electronic apparatus according to claim 17.
